# EUROPEAN PATENT SPECIFICATION

(11) **EP 0 946 811 B1**
(45) Date of publication and mention of the grant of the patent: **18.09.2002**
(21) Application number: 97950914.8
(22) Date of filing: 15.12.1997
(51) Int. Cl.: D06M 15/507, D06M 15/53, C09J 167/00, C08J 3/05, C08G 65/32, C08G 63/668, C08L 67/02, C08L 71/02

(54) **DURABLE HYDROPHILIC POLYMER COATINGS**
BESTÄNDIGE HYDROPHILE POLYMERÜBERZÜGE
REVETEMENTS DE POLYMERE HYDROPHILE D'USAGE DURABLE

(30) Priority: 18.12.1996 US 33192 P; 10.11.1997 US 966607
(43) Date of publication of application: 06.10.1999
(73) Proprietor: STEPAN COMPANY, Northfield, Illinois 60093 (US)
(72) Inventor: PALMER, Charles, Francis, Jr., Newark, DE 19711 (US)
(74) Representative: Eyles, Christopher Thomas
(86) International application number: US9722679
(87) International publication number: WO98027263

(56) References cited:
- EP-A- 0 060 430
- EP-A- 0 247 828
- EP-A- 0 424 750
- EP-A- 0 671 424
- EP-A- 0 752 468
- WO-A-97/00351
- US-A- 3 932 356
- US-A- 4 243 580

## Description

### FIELD OF THE INVENTION

This invention relates to certain polymer compositions and their use to impart a durable hydrophilic coating to woven and non-woven polyester, polypropylene and polyethylene fabrics or fibers.

### BACKGROUND OF THE INVENTION

Polyester, polypropylene and polyethylene woven and non-woven fabrics have many applications for which their hydrophobic characteristics are undesirable. These include applications where a high ability to transmit water is desirable, such as for diapers, adult incontinence pads, agricultural fabrics for landscaping or mulching, and some filtration devices; applications where wicking away of moisture is desirable for comfort reasons, such as for certain clothing and sportswear purposes; and applications where it is desirable to make the surface of a fiber more hydrophilic for better adhesion or easier incorporation into water-borne compositions such as cement mixtures or paper pulps.

Polypropylene or polyethylene is commonly used as the liner (coverstock) in baby diapers and adult incontinence pads, and in these applications it is next to the wearer's skin. By design, moisture must pass through the polypropylene or polyethylene layer into the absorbent layer below. Since polypropylene or polyethylene is naturally hydrophobic, it must be treated to allow the moisture to pass through quickly and not run off the top of the diaper or pad.

In diaper manufacture in the U.S. the above liner is commonly treated with a small amount of a surfactant wetting agent, such as an alcohol ethoxylate, to improve moisture transport through the polypropylene or polyethylene layer. Since the alcohol ethoxylate is usually water soluble, it dissolves and reduces the surface tension of the water. This causes the moisture to wet the polypropylene or polyethylene and pass through more quickly. The use of an alcohol ethoxylate has two important drawbacks, however. Since it dissolves off, little remains to improve passage of any second or subsequent exposures to moisture. The capacity of the absorbent layer is reduced as well, since its absorptivity is based on capillary action, which is adversely affected by absorption of the alcohol ethoxylate.

A coating is needed which would allow moisture to pass through the polypropylene or polyethylene liner quickly, but that will not readily wash off. The present invention provides such a coating and a process for its application.

Polypropylene, polyethylene or polyester are also commonly used in generation of nonwovens used in protective garments such as medical, surgical, laboratory and other garments. Such garments can be uncomfortable due to poor hand and lack of moisture transport. A coating or treatment is needed which softens the nonwoven fabrics or fibers and wicks away moisture to enhance comfort. The present invention provides such a coating or treatment. Thus the compositions, methods, fabrics and fibers of the present invention are useful in clothing applications and other applications where improved wicking or moisture transport through a woven or non-woven fabric of polyester, polypropylene or polyethylene is important. Other potential applications include usage as a softener or soil release treatments for polypropylene, polyethylene, polyester, cotton, polyamide, or polyaramid garments and slickeners for polyester fiberfill.

### SUMMARY OF THE INVENTION

The present invention comprises the following compositions:
1. A mixture comprising
   A. a polymer of the following Formula I

      R₄HNCH(CH₃)CH₂-[OCH₂CH(R₃)]ₓ-O-CH₂CH(CH₃)R₅

      wherein x is 6-100; R₁ is C₁-C₂₄ alkyl, C₁-C₂₄ aryl, C₁-C₂₄ alkylaryl, or C₁-C₂₄ alkenyl; R₂ is H or R₁; R₃ is H, CH₃, or CH₂CH₃ wherein the ratio of(CH₃+CH₂CH₃)/H in the repeat unit is greater than or equal to 6; R₄ is R₂, R₁C(=O), R₁N(R₂)C(=O), or R₁-[OCH₂CH(R₃)]ₓ-O-CH₂CH(CH₃)-N(R₂)C(=O) and R₅ is NHR₄ or OR₁ wherein x, R₁ and R₄ are as defined above, and
   B. a hydrophilic polyester copolymer with repeating segments of ethylene terephthalate units containing 10-50% by weight of polyoxyethylene terephthalate units, derived from a polyoxyethylene glycol of average molecular weight of from 300 to 6,000, and the molar ratio of ethylene terephthalate units to polyoxyethylene terephthalate units in the polymeric compound is between 2:1 and 6:1.
2. A mixture comprising
   A. a polymer of the following Formula II

      A [(OCH₂CHR₃)ₓNHR₄]₃

      wherein A is 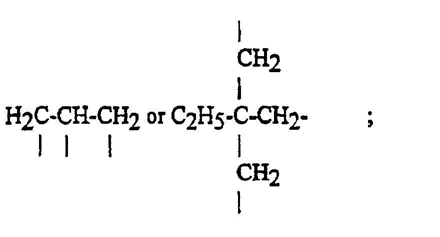 x is 6-100; R₄ is R₂, R₁C(=O), R₁N(R₂)C(=O) or R₁[OCH₂CH(R₃)]ₓ-O-CH₂CH(CH₃)-N(R₂)C(=O); R₁ is C₁-C₂₄ alkyl, C₁-C₂₄ aryl, C₁-C₂₄ alkylaryl, or C₁-C₂₄ alkenyl; R₂ is H or R₁; R₃ is H, CH₃, or CH₂CH₃ wherein the ratio of(CH₃+CH₂CH₃)/H in the repeat unit is greater than or equal to 6, and
   B. a hydrophilic polyester copolymer with repeating segments of ethylene terephthalate units containing 10-50% by weight of polyoxyethylene terephthalate units, derived from a polyoxyethylene glycol of average molecular weight of from 300 to 6,000, and the molar ratio of ethylene terephthalate units to polyoxyethylene terephthalate units in the polymeric compound is between 2:1 and 6:1.

The present invention further comprises the following methods: A method for imparting a durable hydrophilic coating to polyester, polypropylene, polyethylene, cotton, polyamide or polyaramid fabric or fiber comprising application to the surface of the fabric or fiber of at least one composition selected from the group consisting of Formulae I and II as defined above, or of a mixture comprising one of Formulae I and II and a hydrophilic polyester copolymer with repeating segments of ethylene terephthalate units containing 10-50% by weight of polyoxyethylene terephthalate units, derived from a polyoxyethylene glycol of average molecular weight of from 300 to 6,000, and the molar ratio of ethylene terephthalate units to polyoxyethylene terephthalate units in the polymeric compound is between 2:1 and 6:1.

A method for imparting a durable hydrophilic coating to polyester, polypropylene, polyethylene, cotton, polyamide, or polyaramid fabric or fiber comprising application to the surface of the fabric or fiber of at least one composition selected from the group consisting of Formulae I and II as defined above, or of a mixture comprising one of Formulae I and II and ZELCON.

The present invention further comprises the following fabrics or fibers: A woven or nonwoven polyester, polyethylene, polypropylene, cotton, polyamide or polyaramid fabric or fiber having applied to its surface at least one of the compositions selected from the group consisting of Formulae I and II as defined above, or a mixture comprising one of Formulae I and II and a hydrophilic polyester copolymer with repeating segments of ethylene terephthalate units containing 10-50% by weight of polyoxyethylene terephthalate units, derived from a polyoxyethylene glycol of average molecular weight of from 300 to 6,000, and the molar ratio of ethylene terephthalate units to polyoxyethylene terephthalate units in the polymeric compound is between 2:1 and 6:1.

A woven or nonwoven polyester, polyethylene, polypropylene, cotton, polyamide, or polyaramid fabric or fiber having applied to its surface at least one composition selected from the group consisting of Formulae I and II as defined above, or a mixture comprising one of Formulae I and II and ZELCON.

The term "ZELCON" as used herein means a hydrophilic polyester copolymer with repeating segments of ethylene terephthalate units containing 10-50% by weight of polyoxyethylene terephthalate units, derived from a polyoxyethylene glycol of average molecular weight of from 300 to 6,000, and the molar ratio of ethylene terephthalate units to polyoxyethylene terephthalate units in the polymeric compound is between 2:1 and 6:1. A more preferred copolymer is that wherein the polyoxyethylene terephthalate units are derived from a polyoxyethylene glycol with an average molecular weight of from 1,000 to 4,000. These hydrophilic copolyesters are available commercially under the ZELCON tradename from E. I. du Pont de Nemours and company, Wilmington, Delaware.

### DETAILED DESCRIPTION OF THE INVENTION

The present invention comprises compositions that when applied to certain fabrics or fibers such as polyester, polypropylene or polyethylene fabric or fiber impart a durable hydrophilic coating. The present invention further comprises methods for imparting a durable hydrophilic coating to such fabric or fiber comprising application of the compositions as described above. The present invention further comprises, in woven or nonwoven form, such fabric or fiber having such a coating applied to its surface.

By the term "organic solvent" is meant those organic solvents incapable of forming three dimensional networks of strong hydrogen bonds. Examples of suitable solvents include dibasic esters, esters (for example ethyl acetate), ketones (for example acetone), ethers (for example tetrahydrofuran), and tertiary amides (for example dimethylformamide or dimethylacetamide).

The term "hydrophilic copolyester" is used to mean a copolyester containing both polyoxyethylene diester and alkylene diester segments. They may be simple copolyesters, i.e., they contain only polyoxyethylene diester and polyalkylene diester segments, the copolyester being derived from a single polyethylene oxide, diester and glycol. Polyethylene oxides of various molecular weights, dimethyl terephthalate and ethylene glycol are the most common raw materials for these copolymers, mainly because of cost and availability. Numerous variations on the comonomers used to prepare these simple hydrophilic copolyesters are possible. Other alkylene glycols such as propylene and butylene glycols are suitable for the replacement of part of the ethylene glycol, or they are incorporated in minor amounts into the polyethylene oxide employed. Simple ether glycols such as diethylene glycol, and cycloaliphatic diols such as 1,4-cyclohexane dimethanol, are also appropriate as comonomers for the base copolyesters. Among other diesters that are used to replace part of the dimethyl terephthalate are diesters of aliphatic diacids such as adipic and sebacic acids, and diesters of aromatic diacids such as isophthalic and sulfonated isophthalic acids. The base copolymers may additionally contain one or more of the other components, e.g., an acidic group, a basic group, an ionizable salt group, an antioxidant group, a group that absorbs ultraviolet light, a dyestuff group and polymeric groups containing a plurality of either hydroxy groups or amido groups, all of which are disclosed by McIntyre et al. in U.S. Patents 3,416.952; 3,557,039; and 3,619,269.

The hydrophilic copolyesters arc prepared by condensation at relatively high temperatures under reduced pressures. Temperatures of about 200 to 280°C, or even higher, and pressure not higher than about 35 mm Hg (4,67 kPa) are generally employed. Byproduct alcohols and part of the low molecular weight glycols originally charged are removed by distillation during the condensation process. As the process proceeds the viscosity of the copolyester increases.

The hydrophilic copolyester is a polyester copolymer with repeating segments of ethylene terephthalate units containing 10-50% by weight of polyoxyethylene terephthalate units, derived from a polyoxyethylene glycol of average molecular weight of from 300 to 6,000, and the molar ratio of ethylene terephthalate units to polyoxyethylene terephthalate units in the polymeric compound is between 2:1 and 6:1. A preferred copolymer is that wherein the polyoxyethylene terephthalate units are derived from a polyoxyethylene glycol with an average molecular weight of from 1,000 to 4,000. These copolymers are disclosed in U.S. Patent 3,416,952. Examples of these copolymers include those commercially available under the tradename ZELCON 5126 (available from E. I. du Pont de Nemours and Company, Wilmington, DE) and MILEASE T (available from Imperial Chemical Industries, Limited, London, England); both have the Chemical Abstracts Service Registry No. 9016-88-0. Both ZELCON 5126 and MILEASE T are sold in the aqueous dispersion form containing up to 85% water. It is preferable to use the dehydrated polymer to prepare the dispersions to avoid the incorporation of excess moisture. The dehydrated polymer is obtained by drying the above-mentioned commercial dispersions, or can be obtained in the concentrated form from the manufacturers. An example of the latter is ZELCON PG, the concentrated form of ZELCON 5126, and is obtainable from the E. I. du Pont de Nemours and Company, Wilmington, Delaware.

In addition, these hydrophilic polyesters may be further modified after being formed by reaction with one or more polyols containing three or more hydroxy groups or one or more polyoxyethylene glycols or a mixture of one or more of such polyols and one or more of such glycols, as disclosed in U.S. Patent 5,239,019. The modified copolyesters are hydrophilic in nature. They consist of polyols containing three or more hydroxy groups, and polyoxyethylene glycols. The polyols may also contain other functional groups such as, e.g., ester and ether groups. Examples of polyols suitable for modification of the copolyesters include simple polyols such as glycerin, pentaerythritol and sorbitol, low molecular weight ether polyols derived from the simple polyols such as diglycerol and di- and tripentaerythritol, and polymeric polyols such as the partially hydrolyzed polyvinyl acetates and partially esterified derivatives of cellulose. Ethylene oxide adducts of the above polyols are also suitable. The polyoxyethylene glycols may vary in molecular weight from 300 to 6,000 depending on the intended application. Molecular weights of 600 to 3,000 are preferred, with 800 to 1,600 being most preferred. Besides their hydroxy and ether segments, they may optionally contain other functional groups such as amino groups and quaternized amino groups.

The post-reaction of the copolyester with additional hydrophilic entities is carried out under milder conditions than those used in synthesizing the base copolyester. Most are carried out at temperatures of about 150°C or above, at atmospheric pressure, with temperatures of 180 to 200°C being preferred. In some cases vacuum is also applied, but the overall conditions are less vigorous than in the preparation of the base copolyesters. Additionally, when the post-reactant is charged to the heated base copolymer, a reduction in viscosity may initially occur, indicating a reduction in the average molecular weight of the polymer. As the post-reaction proceeds, the viscosity of the mass may increase. However, the post-reaction step is not carried out long enough or under sufficiently severe conditions so as to result in an intractable mass.

### Polyoxypropyleneamines

Suitable polypropylene oxide polymers for use herein include a polymer of polypropylene oxide which is terminated on one or both ends with amine groups, or functionalized amine groups such as amide or urea groups.

The polyoxypropyleneamines of this invention have the following formulae:
I.

   R₄HNCH(CH₃)CH₂-[OCH₂CH(R₃)]ₓ-O-CH₂CH(CH₃)R₅

   wherein x is 6-100; R₁ is C₁-C₂₄ alkyl, C₁-C₂₄ aryl, C₁-C₂₄ alkylaryl, or C₁-C₂₄ alkenyl; R₂ is H or R₁; R₃ is H, CH₃, or CH₂CH₃ wherein the ratio of (CH₃+CH₂CH₃)/H in the repeat unit is greater than or equal to 6; R₄ is R₂, R₁C(=O), R₁N(R₂)C(=O), or R₁-[OCH₂CH(R₃)]ₓ-O-CH₂CH(CH₃)-N(R₂)C(=O) and R₅ is NHR₄ or OR₁ wherein x, R₁ and R₄ are as defined above.
   These are polyoxypropylenediamines optionally endcapped on one or both ends with ether, amide, or urea linkages.
II.

   A [(OCH₂CHR₃)ₓNHR₄]₃

   wherein A is 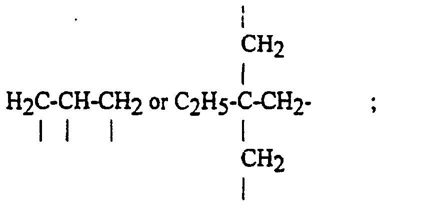 x is 6-100; R₄ is R₂, R₁C(=O), R₁N(R₂)C(=O), or R₁[OCH₂CH(R₃)]ₓ-O-CH₂CH(CH₃)-N(R₂)C(=O); R₁ is C₁-C₂₄ alkyl, C₁-C₂₄ aryl, C₁-C₂₄ alkylaryl, or C₁-C₂₄ alkenyl; R₂ is H or R₁ ; and R₃ is H, CH₃, or CH₂CH₃ wherein the ratio of(CH₃+CH₂CH₃)/H in the repeat unit is greater than or equal to 6.

These are polyoxypropylenetriamines that were formed from the reaction of a triol with propylene oxide, followed by amination.

Many of these polyoxypropyleneamines are available commercially. One commonly known commercial line of polyoxypropylamines includes members of the JEFFAMINE series of polyoxyalkyleneamine products. JEFFAMINE is a tradename of the Huntsman Corporation, Houston, TX, for their line of polyoxyalkyleneamines that includes both poly(propylene oxide) as well as poly(ethylene oxide) amines. Only the poly(propylene oxide)-based materials are suitable for use in the present invention.

The above-defined compositions of or used in the present invention optionally contain at least one of a dispersing agent, surfactant, wetting agent, thickening agent, antistatic agent, coloring agent, fiber lubricant, softener, other surface active agent and hydrophilic agent, other ingredients which impart 'desirable properties for a particular application, or a mixture thereof.

The above-defined aqueous-based compositions of the present invention preferentially include a wetting or dispersing agent to aid in dispersion. Still more preferentially the wetting or dispersing agent is a nonionic surfactant having ethylene oxide moieties and hydrophobic portions. Suitable examples of these materials include ethoxylated alkyl phenols such as some "IGEPAL" nonionic surfactants sold by Rhone-Poulenc Inc., Cranbury NJ, such as "IGEPAL" CO-970; lauryl alcohol ethoxylated with about 50 ethylene oxide molecules, such as "ETHAL" LA 50 available from Ethox Chemicals Inc. Greenville, SC; branched fatry alcohol ethoxylates such as "MERPOL" SE, available from E. I. du Pont de Nemours and Company, Wilmington, DE; and branched chain ethoxylated alcohol such as "POLYWET" A or B, containing a mixture of branched alcohol ethoxylates with about 2 to 13 ethoxy groups along with a solubilizing agent such as sodium xylene sulfonate, which is available from Peach State Labs Inc., Rome, Georgia.

Suitable wetting or dispersing agents or surfactants also include a cationic surfactant, such as "ARQUAD" 12/50 (dodecyl trimethylammonium chloride in water) or 16/50 (hexadecyl trimethylammonium chloride in water), available from Akzo Nobel Chemicals, Inc. Chicago, IL; sodium alkylnapthalene sulfonate salts such as "ALKANOL" XC and branched fatty alcohol ethoxylates such as "MERPOL" SE both available from E. I. du Pont de Nemours and Company, Wilmington, DE; polyoxyethylated (4) isodecyl alcohol such as "RHODASURF"DA-530 available from Rhone-Poulenc Surfactants and Specialties, Cranbury, NJ; and sodium alkylbenzene sulfonate in water such as "BIOSOFT" D-40 available from Stepan Company, Northfield, Illinois.

The present invention further comprises a method for imparting a durable hydrophilic coating to polyester, polypropylene, polyethylene, cotton, polyamide, or polyaramid fabric or fiber comprising application to the surface of the fabric or fiber of a composition of Formula I or II as defined above , or a mixture comprising one of Formula I and II and ZELCON.

These compositions are applied to the fabric or fiber by any suitable means such as wiping, painting, dipping, foaming, feeding at the nip of a roller, spraying, or other means. The composition is typically applied at a minimum level of at least 0.07% weight of solids on fiber, preferably at least 0.25 % weight of solids on fiber, to achieve water wettability and durability. After drying or removal of the solvent, a durable hydrophilic coating remains on the fabric or fiber surface. This coating causes water placed on the surface to rapidly wet the fabric and to pass through the fabric layer.

The present invention further comprises a woven or nonwoven polyester, polyethylene, polypropylene, cotton, polyamide or polyaramid fabric or fiber having applied to its surface any of the above defined compositions of Formulae I and II, or a mixture comprising one of Formulae I and II and ZELCON, or treated by any of the above inventive methods.

The inventive compositions and methods impart durable hydrophilic character to polyester, polypropylene, polyethylene, cotton, polyamide or polyaramid fabrics or fibers in woven or nonwoven form. Such durability is measured in the trade by what are called "insult tests," and repeated exposures to moisture or water washes are referred to as "insults." In the "insult tests" described below on polypropylene, the inventive compositions and the compositions used in the method of the present invention imparted hydrophilic character with durability.

The compositions, methods, fabrics and fibers of the present invention are useful in diapers, incontinence pads, agricultural fabrics for landscaping or mulching, and filtration devices wherein the ability to transmit water through the fabric is desirable. The present invention is also useful in clothing and sportswear where wicking away of moisture is desirable. It has also been found that the compositions of the present invention act as a softener for polypropylene, polyethylene polyester, cotton, polyamide and polyaramid articles as well. The compositions of the present invention are also useful in applications where it is desirable to make a fiber surface more hydrophilic for better adhesion or easier incorporation into water-borne compositions such as cement mixtures or paper pulps. Other applications for the inventive compositions, especially the polypropylene glycol block polyesters, include usage as soil-release treatments for garments and as slickeners for polyester fiberfill.

In the present application, in particular in the following examples, tradenames used are defined as follows and are indicated by capitalization.

ZELCON PG polymer is a polyoxyethylene terephthalate and polyethylene terephthalate block copolymer, which is generated by dehydrating ZELCON 5126. ZELCON 5126 is ZELCON as previously defined dispersed in water with a surfactant.

ALKANOL XC is a sodium alkyinapthalene sulfonate salt.

MERPOL SH and MERPOL SE are branched fatty alcohol ethoxylates with average molecular weights between about 350 and 650. MERPOL A is an octyl alcohol phosphate ester mixture.

ZELCON 5126, ZELCON PG, ALKANOL XC, MERPOL SH, MERPOL SE, and MERPOL A, are available from the E. I. du Pont de Nemours and Company, Wilmington, DE.

MILEASE T is a polyoxyethylene terephthalate and polyethylene terephthalate block copolymer. It is available from the Imperial Chemical Industries Limited, London, England.

POLYWET A and B are both a mixture of a polyoxyethylated branched fatty alcohol (isodecyl) and sodium xylene sulfonate, and they are available from Peach State Labs, Inc., Rome, Georgia, 30162 USA.

ARQUAD 12/50 or 16/50 are each a cationic surfactant, available from Akzo Nobel Chemicals, Inc., Chicago, Illinois, 60606 USA. ARQUAD 12/50 is a solution *of dodecyl* trimethylammonium chloride in water. ARQUAD 16/50 is an aqueous solution of hexadecyl trimethylammonium chloride.

RHODASURF DA-530 is polyoxyethylated (4) isodecyl alcohol. IGEPAL CO-970 is polyoxyethylated (50) nonylphenol. Both are available from Rhone-Poulenc Inc. Cranbury, NJ 08512 USA.

ETHAL LA-50 is polyoxyethylated (50) lauryl alcohol, available from the Ethox Chemicals, Inc., Greenville, South Carolina, 29606 USA.

BIOSOFT D-40 is a 40% aqueous solution of a sodium alkylbenzene sulfonate, available from the Stepan Company, Northfield, Illinois 60093 USA.

JEFFAMINE M-2005 is methoxypoly(oxyethylene/oxypropylene)-2-propylamine, ratio of oxypropylene to oxyethylene of 39/6, approximate molecular weight of 2000. JEFFAMINE D-2000 and D-4000 (also known as XTJ-510) are polyoxypropylene diamines with approximate molecular weights of 2000 and 4000, respectively. JEFFAMINE T-403 is trimethylolpropanyl poly(oxypropylene) triamine with approximate molecular weight of 440. JEFFAMINE XTJ-509 is glyceryl poly(oxypropylene) triamine with approximate molecular weight of 3000. JEFFAMINE products are available from the Huntsman Corporation, Houston, TX, USA.

### Example 1

A dispersion was prepared using the components described below.

| **Ingredients** | **Weight** |
|---|---|
| ZELCON PG | 50 g |
| JEFFAMINE M-2005 | 10 g |
| ETHAL LA-50 | 3.0 g |
| POLYWET B | 6.6 g |
| Distilled water | 350 g |
| Total dispersion (total weight) | 420 g |

A round bottom flask was equipped with a stirrer, thermocouple, nitrogen line and charged with a polyoxyethylene terephthalatepolyethylene terephthalate block copolymer (ZELCON PG polymer). The vessel was swept well with nitrogen, then heated to 180°C. It was stirred until fully melted. While it was melting, methoxypoly(oxyethylene/oxypropylene)-2-propylamine (JEFFAMINE M-2005) was dispersed in a mixture of the water, polyoxyethylated (50) lauryl alcohol (ETHAL LA-50), and a mixture of polyoxyethylated isodecyl alcohol and sodium xylene sulfonate (POLYWET B) in a rapidly stirring blender. Then the molten ZELCON PG polymer was added and the mixture stirred for 3-5 minutes or until well mixed. After diluting the mixture was sonicated or homogenized to complete the dispersion process.

The weight of ZELCON PG given above was its initial weight. After melting, a small amount estimated at 2 to 3 grams clung to the sides of the flask and was lost in transfer.

### Examples 2-7

Methoxypoly(oxyethylene/oxypropylene)-2-propylamine (JEFFAMINE M-2000) polymer, (Formula I with R₁ = CH₃, R₃ = CH₃ and H, ratio of CH₃/H = 32/3, R₄ = H, x = 35) was dissolved in ethyl acetate and applied via padding onto polypropylene coverstock at the application rates shown in Table 3.

**Table 1**

| **Example Number** | **Solids on Weight of Fiber (%)** | **Initial Wettability** | **No. of Successful Insults** |
|---|---|---|---|
| 4 | 0.07 | w/w | 3 |
| 5 | 0.18 | w/w | 6 |
| 6 | 0.24 | w/w | 6 |
| 7 | 0.52 | w/w | 6 |
| 8 | 0.96 | w/w | 6 |
| 9 | 0.99 | w/w | 4 |

These examples showed that the polyoxypropyleneamines of Formula I were effective at providing a durable wettable coating for polypropylene fiber.

### Examples 8-10

Glycerol poly(oxypropylene)triamine (JEFFAMINE XTJ-509) polymer (Formula II with

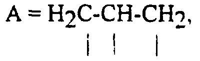

R₄ = H, x = 50 [ave.]) was dissolved in ethyl acetate and applied via padding onto polypropylene coverstock at the application rates shown in Table 4.

**Tablet 2**

| **Example Number** | **Solids on Weight of Fiber (%)** | **Initial Wettability** | **No. of Successful Insults** |
|---|---|---|---|
| 10 | 0.09 | w/w | 3 |
| 11 | 0.1 | w/w | 6 |
| 12 | 0.5 | w/w | 8 |

These examples showed that the polyoxypropylenetriamines of Formula II were effective at providing a durable wettable coating for polypropylene fiber.

### Examples 11-12

Polyoxypropylene diamine (JEFFAMINE XTJ-510), (Formula I with R₄ = H, x = 68 (ave.) was dissolved in ethyl acetate and applied via padding onto polypropylene coverstock at the application rates shown in Table 5.

**Table 3**

| **Example Number** | **Solids on Weight of Fiber (%)** | **Initial Wettability** | **No. of Successful Insults** |
|---|---|---|---|
| 13 | 0.1 | w/w | 7 |
| 14 | 0.5 | w/w | 9+ |

These examples showed that the polyoxypropylenediamines of Formula I were effective at providing a durable wettable coating for polypropylene fiber.

### Examples 13-14

Trimethylolpropanyl poly(oxypropylene)triamine (JEFFAMINE T-403), 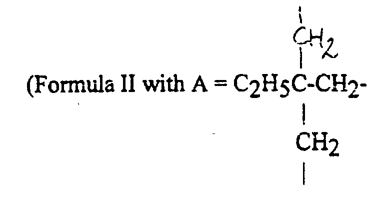 R₄ = H, x = 5-6 [ave.]) was dissolved in ethyl acetate and applied via padding onto polypropylene coverstock at the application rates shown in Table 6.

**Table 4**

| **Example Number** | **Solids on Weight of Fiber (%)** | **Initial Wettability** | **No. of Successful Insults** |
|---|---|---|---|
| 15 | 0.1 | w/w | 3 |
| 16 | 0.5 | w/w | 3 |

These examples showed that polyoxypropylenetriamines of Formula II were effective at providing a durable wettable coating for polypropylene fiber.

### Examples 15-16

Polyoxypropylene diamine (JEFFAMINE D-2000), (Formula I with R₄ = H, x = 33 (ave.) was dissolved in ethyl acetate and applied via padding onto polypropylene coverstock at the application rates shown in Table 7.

**Table 5**

| **Example Number** | **Solids on Weight of Fiber (%)** | **Initial Wettability** | **No. of Successful Insults** |
|---|---|---|---|
| 17 | 0.1 | w/w | 3 |
| 18 | 0.5 | w/w | 4 |

These examples showed that the polyoxypropylenediamines of Formula I were effective at providing a durable wettable coating for polypropylene fiber.

## Claims

1. A mixture comprising
A. a polymer of the following Formula I
R₄HNCH(CH₃)CH₂-[OCH₂CH(R₃)]ₓ-O-CH₂CH(CH₃)R₅
wherein x is 6-100; R₁ is C₁-C₂₄ alkyl, C₁-C₂₄ aryl, C₁-C₂₄ alkylaryl, or C₁-C₂₄ alkenyl; R₂ is H or R₁; R₃ is H, CH₃, or CH₂CH₃ wherein the ratio of(CH₃+CH₂CH₃)/H in the repeat unit is greater than or equal to 6; R₄ is R₂, R₁C(=O), R₁N(R₂)C(=O), or R₁-[OCH₂CH(R₃)]ₓ-O-CH₂CH(CH₃)-N(R₂)C(=O) and R₅ is NHR₄ or OR₁ wherein x, R₁ and R₄ are as defined above, and
B. a hydrophilic polyester copolymer with repeating segments of ethylene terephthalate units containing 10-50% by weight of polyoxyethylene terephthalate units, derived from a polyoxyethylene glycol of average molecular weight of from 300 to 6,000, and the molar ratio of ethylene terephthalate units to polyoxyethylene terephthalate units in the polymeric compound is between 2:1 and 6:1.

2. A mixture comprising
A. a polymer of the following Formula II
A [(OCH₂CHR₃)ₓNHR₄]₃
wherein A is 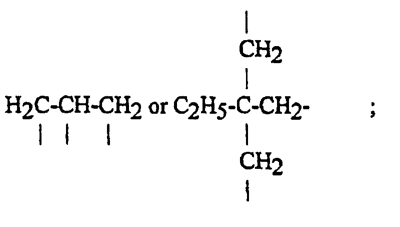 x is 6-100; R₄ is R₂, R₁C(=O), R₁(R₂)C(=O), or R₁-[OCH₂CH(R₃)]ₓ-O-CH₂CH(CH₃)-N(R₂)C(=O); R₁ is C₁-C₂₄ alkyl, C₁-C₂₄ aryl, C₁-C₂₄ alkylaryl, or C₁-C₂₄ alkenyl; R₂ is H or R₁; R₃ is H, CH₃, or CH₂CH₃ wherein the ratio of (CH₃+CH₂CH₃)/H in the repeat unit is greater than or equal to 6;
B. a hydrophilic polyester copolymer with repeating segments of ethylene terephthalate units containing 10-50% by weight of polyoxyethylene terephthalate units, derived from a polyoxyethylene glycol of average molecular weight of from 300 to 6,000, and the molar ratio of ethylene terephthalate units to polyoxyethylene terephthalate units in the polymeric compound is between 2:1 and 6:1.

3. A method for imparting a durable hydrophilic coating to polyester, polypropylene, polyethylene, cotton, polyamide or polyaramid fabric or fiber comprising application to the surface of the fabric or fiber of at least one composition selected from the group consisting of Formula I and II as defined in Claims 1 and 2 respectively, or of a mixture comprising one of Formula I and II and a hydrophilic polyester copolymer with repeating segments of ethylene terephthalate units containing 10-50% by weight of polyoxyethylene terephthalate units, derived from a polyoxyethylene glycol of average molecular weight of from 300 to 6,000, and the molar ratio of ethylene terephthalate units to polyoxyethylene terephthalate units in the polymeric compound is between 2:1 and 6:1.

4. A woven or nonwoven polyester, polyethylene, polypropylene, cotton, polyamide or polyaramid fabric or fiber having applied to its surface at least one of the compositions selected from the group consisting of Formula I and II as defined in Claims 1 and 2 respectively, or a mixture comprising one of Formula I and II and a hydrophilic polyester copolymer with repeating segments of ethylene terephthalate units containing 10-50% by weight of polyoxyethylene terephthalate units, derived from a polyoxyethylene glycol of average molecular weight of from 300 to 6,000, and the molar ratio of ethylene terephthalate units to polyoxyethylene terephthalate units in the polymeric compound is between 2:1 and 6:1.

## Patentansprüche

1. Gemisch enthaltend
A. ein Polymer der folgenden Formel I
**R**_{**4**}**HNCH(CH**_{**3**}**)CH**_{**2**}**-[OCH**_{**2**}**CH(R**_{**3**}**)]**_{**x**}**-O-CH**_{**2**}**CH(CH**_{**3**}**)R**_{**5**}
worin
x 6 bis 100 ist:
R₁ C₁-C₂₄-Alkyl, C₁-C₂₄-Aryl, C₁-C₂₄-Alkylaryl oder C₁-C₂₄-Alkenyl ist;
R₂ H oder R₁ ist;
R₃ H, CH₃ oder CH₂CH₃ ist, wobei das Verhältnis von (CH₃ + CH₂CH₃)/H in der sich wiederholenden Einheit größer als oder gleich 6 ist;
R₄ R₂, R₁C(=0), R₁N(R₂)C(=0) oder R₁[OCH₂CH(R₃)]ₓ-O-CH₂CH(CH₃)-N(R₂)C(=0) ist; und
R₅ NHR₄ oder OR₁ ist, worin x und R₄ wie oben definiert sind, und
B. ein hydrophiles Polyester-Copolymer mit sich wiederholenden Segmenten aus Ethylenterephthalat-Einheiten mit einem Gehalt an 10-50 Gew.-% Polyoxyethylenterephthalat-Einheiten, die von einem Polyoxyethylenglykol eines mittleren Molekulargewichts von 300 bis 6000 abgeleitet sind,
wobei das Molverhältnis von Ethylenterephthalat-Einheiten zu Polyoxyethylenterephthalat-Einheiten in der polymeren Verbindung zwischen 2:1 und 6:1 ist.

2. Gemisch enthalten^{d}
A. ein Polymer der folgenden Formel II A[(OCH₂CHR₃)ₓNHR₄]₃
worin
A 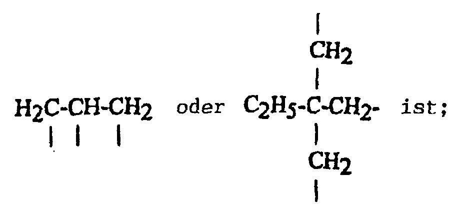
x 6 bis 100 ist;
R₄ R₂, R₁C(=0), R₁N(R₂)C(=0) oder R₁-[OCH₂CH(R₃)]ₓ-O-CH₂CH(CH₃)-N(R₂)C(=O) ist;
R₁ C₁-C₂₄-Alkyl, C₁-C₂₄-Aryl, C₁-C₂₄-Alkylaryl oder C₁-C₂₄-Alkenyl ist;
R₂ H oder R₁ ist;
R₃ H, CH₃ oder CH₂CH₃ ist, wobei das Verhältnis von (CH₃+CH₂CH₃)/H in der sich wiederholenden Einheit größer als oder gleich 6 ist;
B. ein hydrophiles Polyester-Copolymer mit sich wiederholenden Segmenten aus Ethylenterephthalat-Einheiten mit einem Gehalt von 10-50 Gew.-% Polyoxyethylenterephthalat-Einheiten, die von einem Polyoxyethylenglykol eines mittleren Molekulargewichts von 300 bis 6000 abgeleitet sind, wobei das Molverhältnis von Ethylenterephthalat-Einheiten zu Polyoxyethylenterephthalat-Einheiten in der polymeren Verbindung zwischen 2:1 und 6:1 ist.

3. Verfahren zur Schaffung eines beständigen hydrophilen Überzugs auf Polyester-, Polypropylen-, Polyethylen-, Baumwoll-, Polyamid- oder Polyaramidgewebe oder -faser, bei dem man wenigstens eine Zusammensetzung, die aus der aus Formel I und II gemäß Definition in Anspruch 1 bzw. 2 bestehenden Gruppe ausgewählt ist, oder ein eine der Formeln I und II enthaltendes Gemisch und ein hydrophiles Polyester-Copolymer mit sich wiederholenden Segmenten aus Ethylenterephthalat-Einheiten mit einem Gehalt von 10-50 Gew.-% Polyoxyethylenterephthalat-Einheiten, die von einem Polyoxyethylenglykol eines mittleren Molekulargewichts von 300 bis 6000 abgeleitet sind, wobei das Molverhältnis von Ethylenterephthalat-Einheiten zu Polyoxyethylenterephthalat-Einheiten in der polymeren Verbindung zwischen 2:1 und 6:1 ist, auf die Oberfläche des Gewebes oder der Faser aufbringt.

4. Polyester-, Polyethylen-, Polypropylen-, Baumwoll-, Polyamidoder Polyaramidgewebe oder -vliesstoff oder -faser, auf deren Oberfläche aufgebracht sind wenigstens eine der Zusammensetzungen, die aus der aus Formel I und II gemäß Definition in Anspruch 1 bzw. 2 bestehenden Gruppe ausgewählt ist, oder ein eine der Formeln I und II enthaltendes Gemisch und ein hydrophiles Polyester-Copolymer mit sich wiederholenden Segmenten aus Ethylenterephthalat-Einheiten mit einem Gehalt von 10-50 Gew.-% Polyoxyethylenterephthalat-Einheiten, die von einem Polyoxyethylenglykol eines mittleren Molekulargewichts von 300 bis 6000 abgeleitet sind, wobei das Molverhältnis von Ethylenterephthalat-Einheiten zu Polyoxyethylenterephthalat-Einheiten in der polymeren Verbindung zwischen 2:1 und 6:1 ist.

## Revendications

1. Mélange comprenant
A. un polymère ayant la formule I ci-dessous:
R₄HNCH(CH₃)CH₂-[OCH₂CH(R₃)]ₓ-O-CH₂CH(CH₃)R₅
dans laquelle x est un nombre de 6 à 100; R₁ représente un groupe alkyle en C₁-C₂₄, aryle en C₁-C₂₄, alkylaryle en C₁-C₂₄ ou alcényle en C₁-C₂₄; R₂ est H ou R₁; R₃ est H, CH₃ ou CH₂CH₃, le rapport de (CH₃+CH₂CH₃)/H dans l'unité constitutive étant supérieur ou égal à 6; R₄ est R₂, R₁C(=O), R₁N(R₂)C=O ou R₁-[OCH₂CH(R₃)]ₓ-O-CH₂CH(CH₃)-N(R₂)C(=O) et R₅ est NHR₄ ou OR₁, où x, R₁ et R₄ ont la définition donnée ci-dessus, et
B. un copolymère de polyester hydrophile ayant des segments répétitifs d'unités de téréphtalate d'éthylène contenant 10 à 50 % en masse d'unités de téréphtalate de polyoxyéthylène dérivées d'un polyoxyéthylèneglycol ayant une masse molaire moyenne de 300 à 6 000, et le rapport molaire des unités de téréphtalate d'éthylène aux unités de téréphtalate de polyoxyéthylène dans le composé polymère est compris entre 2:1 et 6:1.

2. Mélange comprenant
A. un polymère ayant la formule II ci-dessous
A[(OCH₂CHR₃)ₓNHR₄]₃
dans laquelle A est 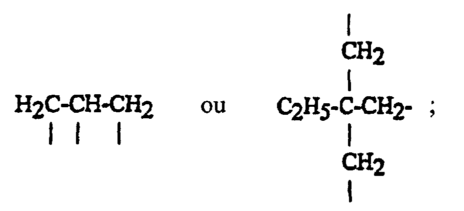 x est un nombre de 6 à 100; R₄ est R₂, R₁C(=O), R₁N(R₂)C=O ou R₁-[OCH₂CH(R₃)]ₓ-O-CH₂CH(CH₃)-N(R₂)C(=O); R₁ représente un groupe alkyle en C₁-C₂₄, aryle en C₁-C₂₄, alkylaryle en C₁-C₂₄ ou alcényle en C₁-C₂₄; R₂ est H ou R₁; R₃ est H, CH₃ ou CH₂CH₃, le rapport de (CH₃+CH₂CH₃)/H dans l'unité constitutive étant supérieur ou égal à 6; et
B. un copolymère de polyester hydrophile ayant des segments répétitifs d'unités de téréphtalate d'éthylène contenant 10 à 50 % en masse d'unités de téréphtalate de polyoxyéthylène dérivées d'un polyoxyéthylèneglycol ayant une masse molaire moyenne de 300 à 6 000, et le rapport molaire des unités de téréphtalate d'éthylène aux unités de téréphtalate de polyoxyéthylène dans le composé polymère est compris entre 2:1 et 6:1.

3. Procédé pour fournir un revêtement hydrophile durable à un tissu ou à des fibres de polyester, de polypropylène, de polyéthylène, de coton, de polyamide ou de polyaramide, comprenant l'application sur la surface du tissu ou des fibres d'au moins une composition choisie dans le groupe constitué par les formules I et II telles que définies dans les revendications respectives 1 et 2, ou d'un mélange comprenant l'une des formules I et II et un copolymère de polyester hydrophile ayant des segments répétitifs d'unités de téréphtalate d'éthylène contenant 10 à 50 % en masse d'unités de téréphtalate de polyoxyéthylène dérivées d'un polyoxyéthylèneglycol ayant une masse molaire moyenne de 300 à 6 000, et le rapport molaire des unités de téréphtalate d'éthylène aux unités de téréphtalate de polyoxyéthylène dans le composé polymère est compris entre 2:1 et 6:1.

4. Tissu tissé ou non tissé ou fibre de polyester, de polyéthylène, de polypropylène, de coton, de polyamide ou de polyaramide sur la surface duquel ou de laquelle au moins une composition choisie dans le groupe constitué par les formules I et II telles que définies dans les revendications respectives 1 et 2, ou d'un mélange comprenant l'une des formules I et II et un copolymère de polyester hydrophile ayant des segments répétitifs d'unités de téréphtalate d'éthylène contenant 10 à 50 % en masse d'unités de téréphtalate de polyoxyéthylène dérivées d'un polyoxyéthylèneglycol ayant une masse molaire moyenne de 300 à 6 000, et le rapport molaire des unités de téréphtalate d'éthylène aux unités de téréphtalate de polyoxyéthylène dans le composé polymère est compris entre 2:1 et 6:1.
